# EUROPEAN PATENT APPLICATION

(11) **EP 2 154 120 A2**
(43) Date of publication of application: **17.02.2010**
(21) Application number: 09009556.3
(22) Date of filing: 23.07.2009
(51) Int. Cl.: C04B 41/87

(54) **Ceramic composite member**

(30) Priority: 25.07.2008 JP 2008192440
(71) Applicant: Ibiden Co., Ltd., Ogaki-shi, Gifu 503-8604 (JP)
(72) Inventor: Kato, Hideki, Ogaki Gifu (JP); Yasuda, Masahiro, Ogaki Gifu (JP)
(74) Representative: HOFFMANN EITLE

(57) **Abstract**

A ceramic composite member is provided. The ceramic composite member includes: a substrate comprising a carbon fiber-reinforced carbon composite; and a ceramic coating formed on a surface of the substrate. A plurality of holes are formed on the surface of the substrate, and internal surfaces of the holes are covered with the ceramic coating.

## Description

### BACKGROUND OF THE INVENTION

### Field of the Invention

The present invention relates to a ceramic composite member in which a ceramic coating is provided on a surface of a carbon fiber-reinforced carbon composite (hereinafter also referred to as a " C/C composite"), which is a substrate comprising carbon fibers and a carbon matrix. The carbon matrix may be in a layered arrangement and may optionally fill the interstices between the carbon fibers.

### Description of the Related Art

A C/C composite has outstanding specific strength and specific modulus, and moreover, excellent heat resistance and chemical stability in a high-temperature region exceeding 1,000°C, so that the C/C composite has been widely industrially used, for example, in semiconductor producing equipment, hot press apparatuses and aerospace applications. In an industrial material of this kind, the radiation factor and chemical stability (reactivity) are influenced by the characteristics of any exposed surface or portion thereof. The C/C composite is a composite of carbon fibers and a carbon matrix such as glassy carbon, pyrolytic carbon or graphite. The purity of a C/C composite depends on the raw materials used and diffusion of contaminants may occur from a surface thereof.

For the above-mentioned reasons, it has been proposed to form a ceramic coating such as a SiC coating or a pyrolytic carbon coating on the surface of a C/C composite. Forming such a coating modifies the properties of the surface of a member using the C/C composite and can improve exothermic and endothermic characteristics or corrosion resistance. Furthermore, the gas impermeable ceramic coating formed on the surface can reduce or prevent diffusion of impurities contained in the C/C composite.

A ceramic composite used in high-temperature environments is likely to experience an interlayer peeling phenomenon at the interface between the ceramic coating and the substrate. This is due to differences in the coefficient of thermal expansion between the substrate and the ceramic coating when being heated from ordinary temperatures to high temperatures. For this reason, there has been proposed a conversion method in which a substrate and a surface layer portion form a silicon carbide layer as a continuous tissue to provide a functionally graded material (for example, see JP-A-H5-132384). Further, it has also been proposed that a paper body obtained by papermaking of carbon fibers is impregnated with pyrolytic carbon by Chemical Vapor Infiltration (CVI), thereby forming a pyrolytic carbon coating (for example, see JP-A-2002-68851).

In the above-mentioned methods, the interlayer peeling is only effectively reduced at the interface between the ceramic coating and the substrate. However, this is not sufficient for substrates in which the C/C composite is aligned in two directions parallel to the ceramic coating or where it is a laminated body comprising a plurality of layers. These methods are also not suitable when fibers constituting the substrate do not cross each other in the thickness direction, such as those in a nonwoven fabric. In these cases, the C/C composite provided by the methods described above will not have sufficient strength against the peeling of layers within the C/C composite itself. Interlayer peeling phenomenon sometimes occurs in the inside of the C/C composite by internal stress generated by the difference in thermal expansion between the ceramic coating and the C/C composite. A main cause for this is that a carbon fiber layer in the vicinity of a surface layer of the C/C composite expands and contracts following the ceramic coating, but the adhering force of the ceramic coating does not act on composite layers more distant from the surface layer (the inside of the C/C composite layer).

### SUMMARY OF THE INVENTION

This invention has been made in view of the above-described circumstances, and an object thereof is to provide a ceramic composite member which can reduce or prevent interlayer peeling on the inside of the C/C composite, which occurs due to the difference in thermal expansion from the ceramic coating, even when peeling strength can not be sufficiently secured, such as when the C/C composite on which the ceramic coating substrate is to be formed is a body aligned in two directions, a laminated body, or when the carbon fibers forming the C/C composite are a nonwoven fabric. The following passages describe preferred embodiments of the invention.

(1) According to one aspect of the present invention, there is provided a ceramic composite member comprising: a substrate comprising a carbon fiber-reinforced carbon composite; and a ceramic coating formed on a surface of the substrate, wherein a plurality of holes are formed on the surface of the substrate, and internal surfaces of the holes are covered with the ceramic coating.

In this ceramic composite member, the ceramic coating which covers the internal surfaces of the holes acts as a mechanical interlayer bonding body and imparts a resistant effect against peeling between the substrate layers. That is, peeling strength is increased. Incidentally, peeling strength is proportional to shear strength at the adhesion surface between the ceramic coating and the internal surface of the holes.

(2) In the ceramic composite member of embodiment (1), the holes may be filled with the ceramic which forms the ceramic coating.

In this ceramic composite member, the filled ceramic configures a solid axis shape to increase compression-tensile strength in an axis line direction and shear strength in a direction vertical to the axis line. In both cases, strength is increased as compared to a ceramic composite member in which the internal surfaces of the holes are covered but have a hollow pipe-like structure.

(3) In the ceramic composite member of embodiment (1), the width of the majority of the opening portions of the holes after applying the ceramic coating may be twice or less than the thickness of the ceramic coating. Preferably, more than 80%, more than 90%, more than 95% or all of the opening portions are twice or less than the thickness of the ceramic coating.

In this ceramic composite member, a decrease in effectiveness of adhesive strength of the ceramic coating due to an excessive increase in width of the openings of the holes, compared to the thickness of the ceramic coating, can be reduced or prevented. That is, the thickness of the ceramic coating with which the internal surfaces of the holes are covered is thicker than the radius of the hollow holes which remain after the formation of the coating: This increases the strength of the ceramic coating as the mechanical interlayer bonding body.

(4) In the ceramic composite member of any one of embodiments (1) to (3), the substrate may comprise a laminate containing a plurality of carbon fiber layers and a plurality of carbon matrix layers.

(5) In the ceramic composite member of embodiment (4), the holes may pass through at least the outermost carbon fiber layer. According to this ceramic composite member, peeling strength between the ceramic coating and at least the outermost carbon fiber layer is increased. Further, the holes pass through the outermost carbon fiber layer, whereby the ceramic coating adheres to the carbon fiber layer second from the outermost layer at bottom portions of the holes to also increase peeling strength between the outermost layer and the second carbon fiber layer.

(6) In the ceramic composite member of any one of embodiments (1) to (5), the depths of the holes may be not uniform. According to this ceramic composite member, the peeling stress is distributed across multiple layers and therefore peeling is less likely to occur than if all holes have uniform depth and where peeling stress is concentrated on only one layer.

(7) In the ceramic composite member of any one of embodiments (1) to (6), each of the holes may have a circular shape at at least an opening portion thereof. According to this ceramic composite member, the holes can be easily formed using a drill or a laser beam processing machine. Peeling strength becomes equal in any radial directions at equal distances from the axis line of the hole, and unlike the case where square holes or the like are formed, a strain caused by stress concentration is less likely to occur in the substrate.

(8) In the ceramic composite member of any one of embodiments (1) to (7), each of the holes may have a cone shape which is expanded inwardly from an opening portion thereof. According to this ceramic composite member, the cone-shaped ceramic coating is continuous with the ceramic coating formed on the surface of the substrate and is buried in the substrate as an anchor, thereby further increasing interlayer peeling strength.

(9) In the ceramic composite member of any one of embodiments (1) to (8), the holes may pass through the substrate. In this ceramic composite member, the ceramic coating is formed passing through the substrate from the front to the back thereof. Accordingly, the ceramic coating not only increases the shear strength at the adhesion surfaces in the holes, but it also increases the holding force for sandwiching the substrate from the front and back sides thereof, thereby further contributing to improved peeling strength.

(10) In the ceramic composite member of any one of embodiments (1) to (9), the carbon fiber-reinforced carbon composite may comprise carbon fibers and a carbon matrix filled in the interstices between the carbon fibers.

(11) In the ceramic composite member of any one of embodiments (1) to (10), the carbon fiber-reinforced carbon composite may be free from vertical yarns. Free from vertical yarns means less than 1%, preferably less than 0.5%, more preferably less than 0.1 % and most preferably none of the yarns are in the vertical direction.

According to the above embodiments of the ceramic composite member, the plurality of holes are formed on the surface of the substrate, and the internal surfaces of the holes are covered with the ceramic coating. The ceramic coating acts as a mechanical interlayer bonding body to bind the substrate in a laminated direction, thereby increasing peeling strength and preventing peeling within the substrate.

### BRIEF DESCRIPTION OF THE DRAWINGS

The above and other aspects of the present invention will become more apparent and more readily appreciated from the following description of exemplary embodiments of the present invention taken in conjunction with the attached drawings, in which:
Fig. 1 is a cross-sectional view showing a ceramic composite member according to an embodiment of the present invention;
Fig. 2 is a cross-sectional view showing a modified embodiment in which holes are filled with a ceramic;
Fig. 3 is a cross-sectional view showing a modified embodiment in which holes having different depths are formed;
Fig. 4 is a cross-sectional view showing a modified embodiment in which holes are formed in a cone shape;
Fig. 5 is a cross-sectional view showing a ceramic composite member according to a further embodiment of the present invention.

### DETAILED DESCRIPTION

Exemplary embodiments of a ceramic composite member according to the present invention will be described below with reference to the accompanying drawings.

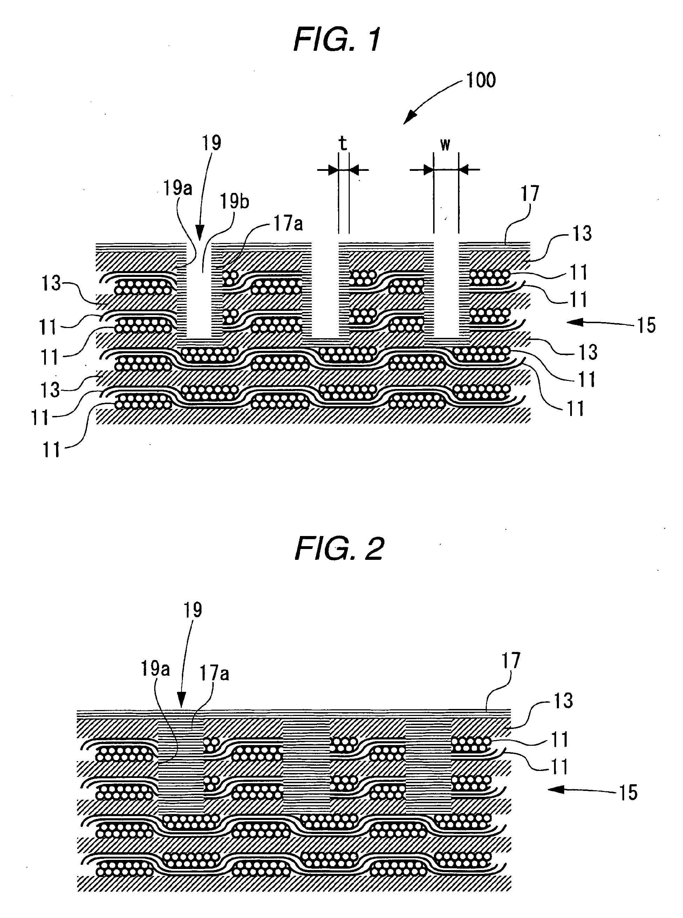

Fig. 1 is a cross-sectional view showing a ceramic composite member according to an embodiment of the present invention. The ceramic composite member 100 comprises a substrate 15 and a ceramic coating 17 which coats a surface of the substrate 15. The substrate 15 comprises carbon fibers 11 and a carbon matrix 13 filled in the interstices between the carbon fibers 11.

A precursor of the carbon matrix 13 filled in the interstices between the carbon fibers 11 may be any substance, as long as it can form a carbonaceous or graphitic matrix by burning. As the matrix precursor carbonized or graphitized by burning, there can be used pitch obtained from petroleum, coal or the like, as well as a thermosetting resin having a high carbonization yield such as a COPNA resin, a phenol resin, a furan resin or a polyimide resin. Further, the matrix can also be formed by chemical vapor infiltration (CVI) of pyrolytic carbon, SiC or the like. The carbon matrix described herein is suitable for all embodiments.

The substrate 15 comprising the carbon fibers 11 and the carbon matrix 13 filled in the interstices between the carbon fibers 11 means a carbon fiber-reinforced carbon composite (C/C composite). The reinforcing carbon fibers 11 constituting a part of the C/C composite may be arranged by filament winding, papermaking methods, or applied as a woven fabric or the like. In Figures 1-4 the carbon fibers 11 are present as both warp (represented by lines) and weft (represented by circles) fibers.

The woven fabric may also include a three-dimensional woven fabric having vertical yarns in the thickness direction as well as planar (warp and weft) fibers such as those in a plain woven fabric, a twill fabric and a triaxial woven fabric. However, in the ceramic composite member 100 according to the embodiment in Figure 1, the absence of vertical yarns means that the peeling strength in the thickness direction in the ceramic composite member cannot be sufficiently secured.

In this respect, a plurality of holes 19 are formed in the substrate 15, and internal surfaces 19a of the holes 19 are covered (coated) with the ceramic coating 17. The ceramic coating 17a, which covers the internal surfaces 19a of the holes 19, acts as a mechanical interlayer bonding body and has a resistant effect against peeling between the substrate layers. The ceramic coating 17a formed on the internal surfaces 19a of the holes 19 acts as an anchor and has a function of preventing peeling. That is, peeling strength is increased. The peeling strength is proportional to shear strength at adhesion surfaces between the ceramic coating 17a and the internal surface 19a of the holes 19.

When the substrate 15 has a constitution in which the carbon fibers 11 and the carbon matrix 13 are laminated in a plurality of layers, the holes 19 pass through at least the outermost layer of the carbon fibers 11. This increases peeling strength between the ceramic coating 17 and at least the outermost layer of the carbon fibers 11. Further, if the holes pass through the outermost layer of the carbon fibers 11, whereby the ceramic coating 17 adheres to the second from outermost layer of the carbon fibers 11 at the bottom portions of the holes 19, peeling strength between the outermost layer and the second layer of the carbon fibers 11 is increased.

The ceramic coating 17 for all embodiments may be any ceramic substance as long as it has heat resistance and can be coated on the C/C composite. For example, there can be utilized pyrolytic carbon, SiC, BN, TaC, AIN or the like. It is advantageous to use a C/C composite and ceramic coating having similar coefficients of thermal expansion. However, in some cases, a coefficient of thermal expansion similar to that of the C/C composite cannot be easily selected.

In such instances, a problem exists in that the difference in thermal expansion between the substrate 15 and the ceramic coating 17 may cause peeling of the ceramic coating 17 or peeling of a laminated portion of the substrate 15. The ceramic composite member 100 according to this invention solves this problem since the ceramic coating 17 acts as an anchor at the interface between the ceramic coating 17 and the substrate 15 as well as at the sub-surface laminated portion of the substrate 15. This reduces or prevents peeling in the overall ceramic composite member, even when the interface between the ceramic coating 17 and the substrate 15 is formed as a functionally graded material. In fact, using a functionally graded material makes peeling even less likely to occur at said interface.

Fig. 2 is a cross-sectional view showing a modified embodiment in which the holes are filled with the ceramic. The holes 19 after forming of the ceramic coating 17 may either be sealed as shown in Fig. 2 or remain as holes 19b as shown in Fig. 1. In Fig. 2 the holes 19 are filled with the ceramic 17a which forms the ceramic coating 17. The filled ceramic 17a configures a solid axis shape to increase compression-tensile strength in an axis line direction and shear strength in a direction vertical to the axis line, as compared to the case where the ceramic 17a which covers the internal surfaces 19a of the holes 19 has a hollow pipe-like structure, as shown in Fig. 1.

In Fig. 1, where holes 19b remain after the formation of the ceramic coating 17a in holes 19, the width W of the opening portions of the holes 19b is preferably twice or less the thickness t of the ceramic coating 17a. A decrease in effectiveness of adhesive strength of the ceramic coating 17 due to an excessive increase in width W of the opening portions of the holes 19b, compared to the thickness t of the ceramic coating 17a, can be reduced or prevented. That is, the thickness t of the ceramic coating 17a with which the internal surfaces 19a of the holes 19 are covered is thicker than the radius of the hollow holes 19b which remain after the formation of the coating. This ensures that strength of the ceramic coating 17, acting as the mechanical interlayer bonding body, is effectively improved.

In each embodiment, the plurality of holes 19 are formed vertically from the surface of the substrate 15. Since the holes are vertical, they can be easily formed, for example, by cutting with a cutting tool or perforation before curing and burning of the C/C composite. Moreover, the internal surfaces 19a of the holes 19 can be easily covered with the ceramic coating 17a.

The plurality of holes 19 may be formed either on the entire surface of the ceramic composite member 100 or only in the vicinity of an exposed end portion of a laminated surface of the C/C composite. Further, the plurality of holes 19 may be formed on the entire surface of the ceramic composite member 100 but formed at a higher density in the vicinity of the end portion. The reason for this is that thermal expansion strain which occurs by the formation of the ceramic coating 17 is likely to concentrate in the vicinity of the end portion, and particularly, peeling of the substrate 15 is likely to occur in the vicinity of the end portion.

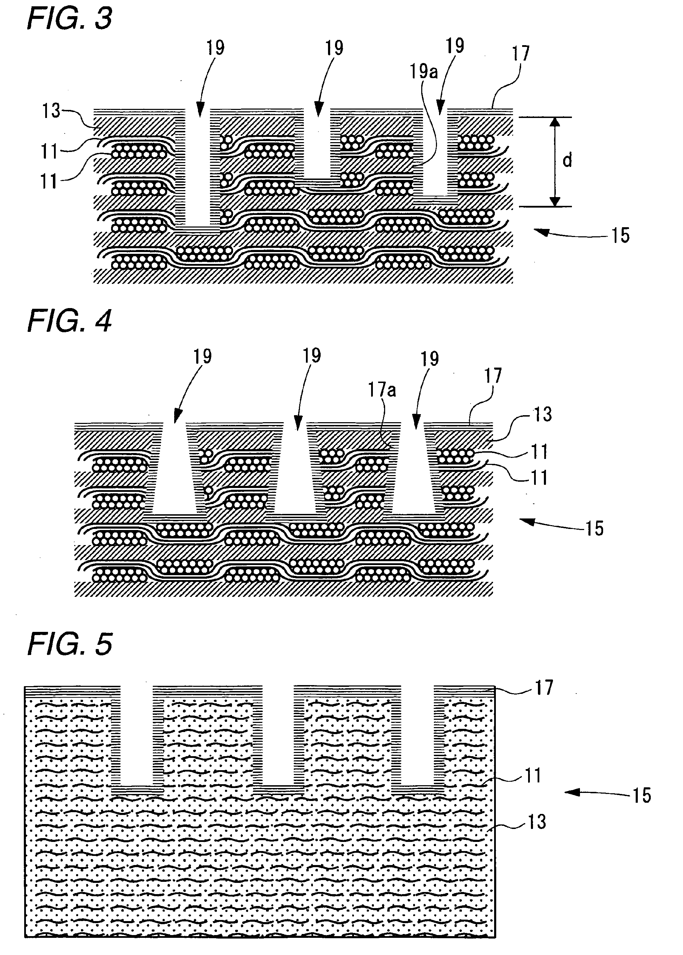

Fig. 3 is a cross-sectional view showing another modified embodiment in which holes having different depths are formed. The depths d of the holes 19 may be all the same or may vary (not be uniform). When the depths d are the same, stress concentration is likely to occur at the layer where the deepest portions of the holes 19 exist, resulting in the easy occurrence of peeling in the vicinity of the deepest portions of the holes 19. However, when the depths d vary, the stress concentration is less likely to occur and therefore peeling is less likely to occur. That is, when the depths d of the holes 19 are not uniform, the peeling stress is distributed across multiple layers and therefore less likely to occur than if the holes have the same depth where peeling stress is concentrated on only one layer.

For each embodiment, it is advantageous that the holes 19 have a circular shape at at least the opening portions. In this case, the holes can be easily made using a drill or a laser beam processing machine. Further, peeling strength becomes equal in any radial directions at equal distances from the axis line of each hole 19, and unlike the case where square holes or the like are formed, a strain caused by stress concentration becomes less likely to occur in the substrate 15.

Fig. 4 is a cross-sectional view showing still another embodiment in which the holes are formed in a cone shape. The holes 19 may have a cone shape which is expanded inwardly from the opening portions, as shown in Fig. 4. In other words, the cone shape has an opening portion smaller than a deepest portion in size. In this embodiment, the holes are formed, for example, in a truncated cone shape. The cone-shaped ceramic coating 17a is continuous with the ceramic coating 17 formed on the surface of the substrate 15 and is buried in the substrate. It acts as an anchor which cannot be pulled out, thereby further increasing the interlayer peeling strength.

Furthermore, although not shown in the figures, the holes 19 may pass entirely through the substrate 15. When the holes 19 pass through the substrate 15, the ceramic coating 17a is formed such that it passes through the substrate 15 from the front to the back thereof. Accordingly, the ceramic coating 17a not only increases shear strength at the adhesion surfaces in the holes, but it also increases the holding force for sandwiching the substrate 15 from the front and back sides thereof. This further contributes to improved peeling strength. In such a pass-through structure, the ceramic coating 17 is formed on the front and back surfaces of the substrate 15, and the ceramic coating 17a formed on the internal surfaces 19a of the holes 19 is continuous at both ends thereof with the ceramic coating 17 on the front and back of the substrate. This forms a strong joined structure in which the substrate 15 is sandwiched between coating layers 17 on the front and back thereof.

Hereinafter, a method for producing the ceramic composite member 100 will be described.

### [Substrate]

As a substrate 15, any C/C composite, such as those commercially available, can be utilized. A plurality of holes 19 is formed on a commercially available C/C composite after curing and burning or instead may be formed before curing and burning. When the holes are formed after curing and burning, they can be formed in any suitable manner such as mechanically by drill or the like, or other methods such as by laser processing or the like.

When the holes are formed before curing and burning, the holes may be easily formed with a needle or the like without the need for a drill or laser. When formed before curing, the C/C composite is softened so that the holes 19 may disappear. Accordingly, the holes 19 may be formed, for example, by using organic needles made of a resin, wood, paper or the like, and cured and burned without pulling them out. When organic needles are used, the needles are carbonized or decomposed while largely contracting in the burning process even in the case of the truncated cone-shaped holes 19, thereby allowing them to be easily removed.

### [Coating]

The formation of the ceramic coating 17 can be performed by any known methods in the art. For example, in the case of pyrolytic carbon coating, the C/C composite prepared in the above-mentioned process is placed in a CVD furnace, and heated at 1,300 to 2,000°C. A hydrocarbon gas which acts as a raw material, such as propane, and a carrier gas, such as hydrogen, are allowed to flow into the furnace to form a coating on a surface of the C/C composite. The raw material gas diffuses in the furnace so that it can infiltrate the plurality of holes formed on the surface of the C/C composite. Accordingly, the ceramic coating 17 can be formed on the internal surfaces 19a of the holes 19.

In the case of SiC coating, the C/C composite prepared in the above-mentioned process is placed in a CVD furnace, and heated at 1,100 to 1,500°C. Trichloromethylsilane as a raw material gas and hydrogen as a carrier gas are allowed to flow into the furnace to form a coating on a surface of the C/C composite. Similarly to the above, such a raw material gas diffuses in the furnace so that it can infiltrate the plurality of holes 19 formed on the surface of the C/C composite. Accordingly, the ceramic coating 17 can be easily formed on the internal surfaces 19a of the holes 19.

Furthermore, the SiC coating may be formed by a CVR method and not the CVD method. By using the CVR method, peeling between the coating and substrate 15 is less likely to occur since a functionally graded interface is formed. According to the CVR method, the above-mentioned C/C composite is placed in a reaction furnace, on the bottom portion of which a generation source comprising Si powder or a mixture of SiC powder and SiO₂ powder has been placed, and is heated at 1,600 to 2,300°C thereby obtaining the SiC coating.

Therefore, according to the ceramic composite member 100 having the above-mentioned constitution, the plurality of holes 19 are formed on the surface of the substrate 15, and the internal surfaces 19a of the holes 19 are covered with the ceramic coating 17a. Accordingly, even when peeling strength can not be sufficiently secured, such as when the C/C composite acting as the substrate 15 is a body aligned in two directions parallel to the ceramic coating 17, or a laminated body where the carbon fibers do not cross each other in the thickness direction, as seen in a nonwoven fabric, the ceramic coating 17a which covers the internal surfaces 19a of the holes 19 acts as the mechanical interlayer bonding body to bind the substrate 15 in a laminated direction, thereby increasing peeling strength. As a result, peeling of the inside of the substrate, which occurs due to a thermal expansion strain caused by coating of the ceramic coating 17 can be reduced or prevented.

In the above-described respective embodiments (Figs. 1-4), the carbon fibers 11 constituting a part of the substrate 15 have been shown as a woven fabric form in which warp yarns and weft yarns cross each other in the drawings. However, in the ceramic composite member 100 according to any embodiment of the present invention, the carbon fibers 11 constituting the substrate 15 may be a nonwoven fabric form or the like in which they do not cross each other in the thickness direction. Such an embodiment is shown in Fig. 5.

## Claims

1. A ceramic composite member (100) comprising:
a substrate comprising a carbon fiber-reinforced carbon composite (15); and
a ceramic coating formed on a surface of the substrate (17),
wherein a plurality of holes (19) are formed on the surface of the substrate, and the internal surfaces of the holes (19a) are covered with the ceramic coating (17a).

2. The ceramic composite member according to claim 1,
wherein the holes (19) are filled with the ceramic which forms the ceramic coating.

3. The ceramic composite member according to claim 1,
wherein the width of the opening portions of the holes (W) after applying the ceramic coating is twice or less the thickness (t) of the ceramic coating (17a).

4. The ceramic composite member according to any one of claims 1 to 3,
wherein the substrate comprises a laminate containing a plurality of carbon fiber layers (11) and a plurality of carbon matrix layers (13).

5. The ceramic composite member according to claim 4,
wherein the holes pass through at least the outermost carbon fiber layer.

6. The ceramic composite member according to any one of claims 1 to 5,
wherein the depths (d) of the holes are not uniform.

7. The ceramic composite member according to any one of claims 1 to 6,
wherein each of the holes has a circular shape at at least the opening portion thereof.

8. The ceramic composite member according to any one of claims 1 to 7,
wherein each of the holes has a cone shape which is expanded inwardly from the opening portion thereof.

9. The ceramic composite member according to any one of claims 1 to 8,
wherein the holes pass entirely through the substrate.

10. The ceramic composite member according to any one of claims 1 to 9,
wherein the carbon fiber-reinforced carbon composite comprises carbon fibers and a carbon matrix filled in the interstices between the carbon fibers.

11. The ceramic composite member according to any one of claims 1 to 10,
wherein the carbon fiber-reinforced carbon composite is free from vertical yarns.
